# EUROPEAN PATENT APPLICATION

(11) **EP 3 422 277 A1**
(43) Date of publication of application: **02.01.2019**
(21) Application number: 18175776.6
(22) Date of filing: 04.06.2018
(51) Int. Cl.: G06Q 30/02

(54) **METHOD AND SYSTEM FOR CONDUCTING MOBILE SURVEY**

(30) Priority: 29.06.2017 KR 20170082697
(71) Applicant: Naver Corporation, Seongnam-si, Gyeonggi-do 13561 (KR)
(72) Inventor: Nam, You Mee, 13561 Seongnam-si,Gyeonggi-do (KR); Song, Yon Joo, 13561 Seongnam-si,Gyeonggi-do (KR); Oh, Doukyoung, 13561 Seongnam-si, Gyeonggi-do (KR); Chu, Hee eun, 13561 Seongnam-si, Gyeonggi-do (KR); Jeon, Huiseung, 13561 Seongnam-si, Gyeonggi-do (KR); Yun, Chan Ho, 13561 Seongnam-si, Gyeonggi-do (KR); Park, Rockyou, 13561 Seongnam-si, Gyeonggi-do (KR)
(74) Representative: V.O.

(57) **Abstract**

Disclosed is a method and system for conducting a mobile survey. A survey method includes registering a survey that includes at least one question item; transferring the survey to survey participants and receiving a response to the survey from the survey participants; and providing subsequent content associated with the survey to at least a portion of survey participants in association with a response state of the survey.

## Description

### BACKGROUND OF THE INVENTION

### Field of Invention

One or more example embodiments of the invention relate to a technique for providing a survey service.

### Description of Related Art

In general, a method of conducting a survey includes, for example, making a call to an unspecific majority, a face-to-face interview, or using the Internet.

As an example of an Internet-based survey method, Korean Patent Publication No. 10-2007-0047387, published on May 7, 2007, discloses a technique that transmits a survey to a mobile terminal of a member having agreed to the survey, uses data stored in a remote server as member information, and enables a series of process from generation of a survey to output of a report to be performed at a single server.

### BRIEF SUMMARY OF THE INVENTION

One or more example embodiments provide a survey method and system that may provide functions of verifying a response state of a survey participant and encouraging a non-respondent to participate in a survey.

One or more example embodiments also provide a survey method and system that may perform a subsequent operation corresponding to each response state of a survey participant.

According to an aspect of at least one example embodiment, there is provided a survey method implemented over a network for conducting a mobile survey, the method including registering a survey that includes at least one question item; transferring the survey to a survey participant and receiving a response to the survey from the survey participants; and providing subsequent content associated with the survey to at least a portion of survey participants in association with a response state of the survey.

The registering of the survey may include providing a template in which the question item is preset for each survey theme; and registering a survey of a corresponding theme using a template selected from the templates.

The registering of the survey may include setting the subsequent content with respect to at least one state based on whether the response to the survey is received.

The registering of the survey may include setting the subsequent content with respect to at least one selection item that is selectable as a response to the question item.

The providing of the subsequent content may include grouping the survey participants based on the response state, and providing the subsequent content corresponding to the response state to at least one grouped member.

The response state may include at least one of whether a response to the question item is received and response content.

The providing of the subsequent content may include classifying the survey participants into a respondent and a non-respondent based on whether a response to the survey is received, and providing a remind notice for encouraging a member corresponding to the non-respondent to participate in the survey.

The providing of the subsequent content may include providing content associated with a specific selection item to a member that selects the specific selection item as a response to the question item among the survey participants.

The subsequent content may include at least one of an additional survey, notice information, schedule information, event information, benefit information, and service page information as content associated with the survey.

According to an aspect of at least one example embodiment, there is provided a computer program stored in a non-transitory computer-readable recording medium to implement the survey method in a computer.

According to an aspect of at least one example embodiment, there is provided a non-transitory computer-readable recording medium storing instructions that, when executed by a processor, cause the processor to implement the survey method.

According to an aspect of at least one example embodiment, there is provided a survey system for conducting a mobile survey over a network, the survey system including at least one processor configured to execute computer-readable instructions. The at least one processor includes a register configured to register a survey that includes at least one question item; a performer configured to transfer the survey to a survey participant and by receiving a response to the survey from the survey participant; and a provider configured to provide subsequent content associated with the survey to at least a portion of survey participants in association with a response state of the survey.

According to some example embodiments, it is possible to further increase a survey response rate by verifying a response state of survey participants, by classifying the survey participants into a respondent or a non-respondent, and by providing a participation encouragement notice to the non-respondent.

According to some example embodiments, it is possible to consecutively perform a series of survey-related operations in an easier manner by performing a subsequent operation corresponding to each response state of a survey participant.

Further areas of applicability will become apparent from the description provided herein. The description and specific examples in this summary are intended for purposes of illustration only and are not intended to limit the scope of the present disclosure.

### BRIEF DESCRIPTION OF THE DRAWINGS

Example embodiments will be described in more detail with regard to the figures, wherein like reference numerals refer to like parts throughout the various figures unless otherwise specified, and wherein:
FIG. 1 is a diagram illustrating an example of a network environment according to one embodiment;
FIG. 2 is a block diagram illustrating an example of a configuration of an electronic device and a server according to one embodiment;
FIG. 3 is a block diagram illustrating an example of components includable in a processor of a server according to one embodiment;
FIG. 4 is a flowchart of a method performed by a server according to one embodiment;
FIGS. 5 and 6 illustrate a survey registration process according to one embodiment;
FIG. 7 illustrates a survey transfer process according to one embodiment;
FIGS. 8 through 10 illustrate a survey participation process according to one embodiment;
FIGS. 11 and 12 illustrate a survey result verification process according to one embodiment; and
FIG. 13 illustrates a subsequent operation proceeding process according to one embodiment.

It should be noted that these figures are intended to illustrate the general characteristics of methods and/or structure utilized in certain example embodiments and to supplement the written description provided below. These drawings are not, however, to scale and may not precisely reflect the precise structural or performance characteristics of any given embodiment, and should not be interpreted as defining or limiting the range of values or properties encompassed by the example embodiments.

### DETAILED DESCRIPTION OF THE INVENTION

One or more example embodiments will be described in detail with reference to the accompanying drawings. Example embodiments, however, may be embodied in various different forms, and should not be construed as being limited to only the illustrated embodiments. Rather, the illustrated embodiments are provided as examples so that this disclosure will be thorough and complete, and will fully convey the concepts of this disclosure to those skilled in the art. Accordingly, known processes, elements, and techniques, may not be described with respect to some example embodiments. Unless otherwise noted, like reference characters denote like elements throughout the attached drawings and written description, and thus descriptions will not be repeated.

Although the terms "first," "second," "third," etc., may be used herein to describe various elements, components, regions, layers, and/or sections, these elements, components, regions, layers, and/or sections, should not be limited by these terms. These terms are only used to distinguish one element, component, region, layer, or section, from another region, layer, or section. Thus, a first element, component, region, layer, or section, discussed below may be termed a second element, component, region, layer, or section, without departing from the scope of this disclosure.

Spatially relative terms, such as "beneath," "below," "lower," "under," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below," "beneath," or "under," other elements or features would then be oriented "above" the other elements or features. Thus, the example terms "below" and "under" may encompass both an orientation of above and below. The device may be otherwise oriented (rotated 90 degrees or at other orientations) and the spatially relative descriptors used herein interpreted accordingly. In addition, when an element is referred to as being "between" two elements, the element may be the only element between the two elements, or one or more other intervening elements may be present.

As used herein, the singular forms "a," "an," and "the," are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups, thereof. As used herein, the term "and/or" includes any and all combinations of one or more of the associated listed items. Expressions such as "at least one of," when preceding a list of elements, modify the entire list of elements and do not modify the individual elements of the list. Also, the term "exemplary" is intended to refer to an example or illustration.

When an element is referred to as being "on," "connected to," "coupled to," or "adjacent to," another element, the element may be directly on, connected to, coupled to, or adjacent to, the other element, or one or more other intervening elements may be present. In contrast, when an element is referred to as being "directly on," "directly connected to," "directly coupled to," or "immediately adjacent to," another element there are no intervening elements present.

Unless otherwise defined, all terms (including technical and scientific terms) used herein have the same meaning as commonly understood by one of ordinary skill in the art to which example embodiments belong. Terms, such as those defined in commonly used dictionaries, should be interpreted as having a meaning that is consistent with their meaning in the context of the relevant art and/or this disclosure, and should not be interpreted in an idealized or overly formal sense unless expressly so defined herein.

Example embodiments may be described with reference to acts and symbolic representations of operations (e.g., in the form of flow charts, flow diagrams, data flow diagrams, structure diagrams, block diagrams, etc.) that may be implemented in conjunction with units and/or devices discussed in more detail below. Although discussed in a particularly manner, a function or operation specified in a specific block may be performed differently from the flow specified in a flowchart, flow diagram, etc. For example, functions or operations illustrated as being performed serially in two consecutive blocks may actually be performed simultaneously, or in some cases be performed in reverse order.

Units, components and/or devices according to one or more example embodiments may be implemented using hardware, software, and/or a combination thereof. For example, hardware devices may be implemented using processing circuitry such as, but not limited to, a processor, Central Processing Unit (CPU), a controller, an arithmetic logic unit (ALU), a digital signal processor, a microcomputer, a field programmable gate array (FPGA), a System-on-Chip (SoC), a programmable logic unit, a microprocessor, or any other device capable of responding to and executing instructions in a defined manner.

Software may include a computer program, program code, instructions, or some combination thereof, for independently or collectively instructing or configuring a hardware device to operate as desired. The computer program and/or program code may include program or computer-readable instructions, software components, software modules, data files, data structures, and/or the like, capable of being implemented by one or more hardware devices, such as one or more of the hardware devices mentioned above. Examples of program code include both machine code produced by a compiler and higher level program code that is executed using an interpreter.

For example, when a hardware device is a computer processing device (e.g., a processor, Central Processing Unit (CPU), a controller, an arithmetic logic unit (ALU), a digital signal processor, a microcomputer, a microprocessor, etc.), the computer processing device may be configured to carry out program code by performing arithmetical, logical, and input/output operations, according to the program code. Once the program code is loaded into a computer processing device, the computer processing device may be programmed to perform the program code, thereby transforming the computer processing device into a special purpose computer processing device. In a more specific example, when the program code is loaded into a processor, the processor becomes programmed to perform the program code and operations corresponding thereto, thereby transforming the processor into a special purpose processor.

Software and/or data may be embodied permanently or temporarily in any type of machine, component, physical or virtual equipment, or computer storage medium or device, capable of providing instructions or data to, or being interpreted by, a hardware device. The software also may be distributed over network coupled computer systems so that the software is stored and executed in a distributed fashion. In particular, for example, software and data may be stored by one or more computer readable recording mediums, including the tangible or non-transitory computer-readable storage media discussed herein.

According to one or more example embodiments, computer processing devices may be described as including various functional units that perform various operations and/or functions to increase the clarity of the description. However, computer processing devices are not intended to be limited to these functional units. For example, in one or more example embodiments, the various operations and/or functions of the functional units may be performed by other ones of the functional units. Further, the computer processing devices may perform the operations and/or functions of the various functional units without sub-dividing the operations and/or functions of the computer processing units into these various functional units.

Units, components and/or devices according to one or more example embodiments may also include one or more storage devices. The one or more storage devices may be tangible or non-transitory computer-readable storage media, such as random access memory (RAM), read only memory (ROM), a permanent mass storage device (such as a disk drive, solid state (e.g., NAND flash) device, and/or any other like data storage mechanism capable of storing and recording data. The one or more storage devices may be configured to store computer programs, program code, instructions, or some combination thereof, for one or more operating systems and/or for implementing the example embodiments described herein. The computer programs, program code, instructions, or some combination thereof, may also be loaded from a separate computer readable storage medium into the one or more storage devices and/or one or more computer processing devices using a drive mechanism. Such separate computer readable storage medium may include a Universal Serial Bus (USB) flash drive, a memory stick, a Blu-ray/DVD/CD-ROM drive, a memory card, and/or other like computer readable storage media. The computer programs, program code, instructions, or some combination thereof, may be loaded into the one or more storage devices and/or the one or more computer processing devices from a remote data storage device via a network interface, rather than via a local computer readable storage medium. Additionally, the computer programs, program code, instructions, or some combination thereof, may be loaded into the one or more storage devices and/or the one or more processors from a remote computing system that is configured to transfer and/or distribute the computer programs, program code, instructions, or some combination thereof, over a network. The remote computing system may transfer and/or distribute the computer programs, program code, instructions, or some combination thereof, via a wired interface, an air interface, and/or any other like medium.

The one or more hardware devices, the one or more storage devices, and/or the computer programs, program code, instructions, or some combination thereof, may be specially designed and constructed for the purposes of the example embodiments, or they may be known devices that are altered and/or modified for the purposes of example embodiments.

A hardware device, such as a computer processing device, may run an operating system (OS) and one or more software applications that run on the OS. The computer processing device also may access, store, manipulate, process, and create data in response to execution of the software. For simplicity, one or more example embodiments may be exemplified as one computer processing device; however, one skilled in the art will appreciate that a hardware device may include multiple processing elements and multiple types of processing elements. For example, a hardware device may include multiple processors or a processor and a controller. In addition, other processing configurations are possible, such as parallel processors.

Although described with reference to specific examples and drawings, modifications, additions and substitutions of example embodiments may be variously made according to the description by those of ordinary skill in the art. For example, the described techniques may be performed in an order different with that of the methods described, and/or components such as the described system, architecture, devices, circuit, and the like, may be connected or combined to be different from the above-described methods, or results may be appropriately achieved by other components or equivalents.

Hereinafter, example embodiments will be described with reference to the accompanying drawings.

The example embodiments relate to a technique for conducting a mobile survey, and more particularly, to a survey method and system that verify a response state of a survey participant and perform a subsequent operation for each response state.

The example embodiments disclosed herein verify a response state of a survey participant and perform a subsequent operation for each response state, and accordingly, may achieve many advantages in terms of survey response rate, efficiency, convenience, cost reduction, and the like.

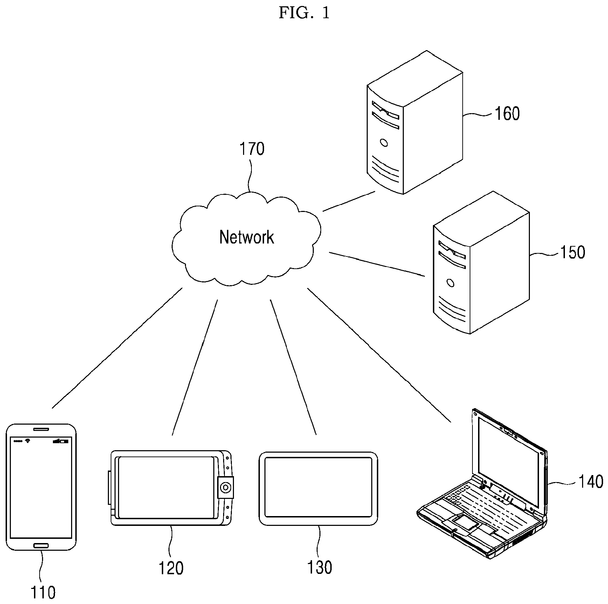

FIG. 1 is a diagram illustrating an example of a network environment according to one embodiment. Referring to FIG. 1, the network environment includes a plurality of electronic devices 110, 120, 130, 140, a plurality of servers 150, 160, and a network 170. FIG. 1 is provided as an example only and thus, a number of electronic devices and/or a number of servers are not limited thereto.

Each of the plurality of electronic devices 110, 120, 130, 140 may be a fixed terminal or a mobile terminal configured as a computer device. For example, the plurality of electronic devices 110, 120, 130, 140 may be a smartphone, a mobile phone, a tablet personal computer (PC), a navigation device, a computer, a laptop computer, a digital broadcasting terminal, a personal digital assistant (PDA), a portable multimedia player (PMP), and the like. For example, the electronic device 110 may communicate with other electronic devices 120, 130, and/or 140, and/or the servers 150 and/or 160 over the network 170 in a wired communication manner or in a wireless communication manner.

The communication scheme is not particularly limited and may include a communication method that uses a near field communication between devices as well as a communication method using a communication network, for example, a mobile communication network, the wired Internet, the wireless Internet, a broadcasting network, etc., which may be included in the network 170. The network 170 may include at least one of network topologies that include, for example, a personal area network (PAN), a local area network (LAN), a campus area network (CAN), a metropolitan area network (MAN), a wide area network (WAN), a broadband network (BBN), the Internet, and the like. Also, the network 170 may include network topologies such as a bus network, a star network, a ring network, a mesh network, a star-bus network, a tree or hierarchical network, and the like. However, these are only examples and the example embodiments are not limited thereto.

Each of the servers 150 and 160 may be configured as a computer apparatus or a plurality of computer apparatuses that provides instructions, codes, files, contents, services, and the like through communication with the plurality of electronic devices 110, 120, 130, 140 over the network 170. For example, the server 160 may provide a file for installing an application to the electronic device 110 connected through the network 170. In this case, the electronic device 110 may install the application using the file provided from the server 160. Also, the server 160 may access the server 150 under control of at least one program, for example, browser or the installed application, or an operating system (OS) included in the electronic device 110, and may use a service or content provided from the server 150. For example, when the electronic device 110 sends a service request message to the server 150 through the network 170 under control of the application, the server 150 may send a code corresponding to the service request message to the electronic device 110 and the electronic device 110 may provide content to a user by configuring and displaying a screen according to the code under control of the application.

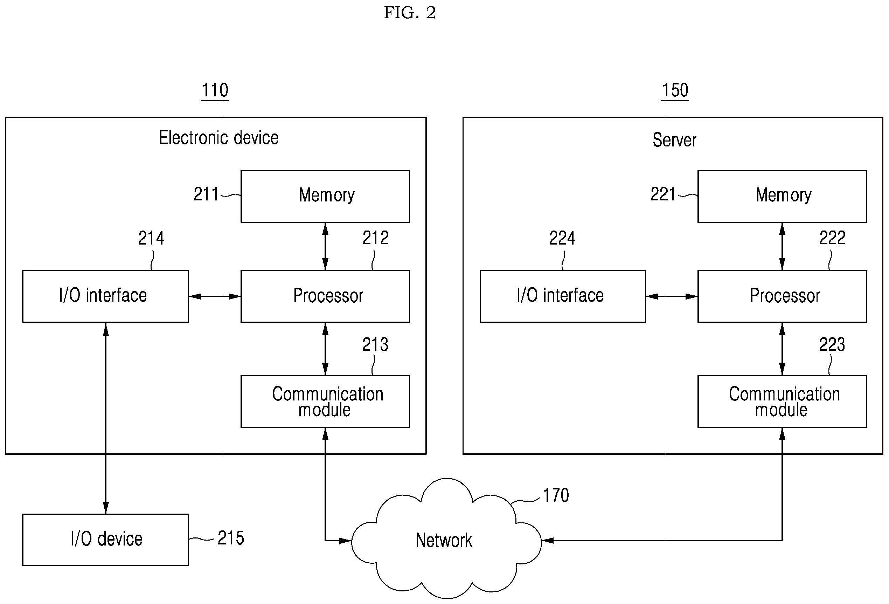

FIG. 2 is a block diagram illustrating an example of a configuration of an electronic device and a server according to one embodiment. FIG. 2 illustrates a configuration of the electronic device 110 as an example for a single electronic device and illustrates a configuration of the server 150 as an example for a single server. The same or similar components may be applicable to other electronic devices 120, 130, and/or 140, or the server 160, and also to still other electronic devices or still other servers.

Referring to FIG. 2, the electronic device 110 includes a memory 211, a processor 212, a communication module 213, and an input/output (I/O) interface 214, and the server 150 includes a memory 221, a processor 222, a communication module 223, and an I/O interface 224. The memory 211, 221 may include a permanent mass storage device, such as random access memory (RAM), read only memory (ROM), a disk drive, a solid state drive, a flash memory, etc., as a non-transitory computer-readable storage medium. Also, an OS or at least one program code, for example, a code for an application installed and executed on the electronic device 110, etc., may be stored in the memory 211, 221. Such software components may be loaded from another non-transitory computer-readable storage medium separate from the memory 211, 221 using a drive mechanism. Other non-transitory computer-readable storage medium may include, for example, a floppy drive, a disk, a tape, a DVD/CD-ROM drive, a memory card, etc. According to other example embodiments, software components may be loaded to the memory 211, 221 through the communication module 213, 223, instead of, or in addition to, the non-transitory computer-readable storage medium. For example, at least one program may be loaded to the memory 211, 221 based on a program, for example, an application installed by files provided over the network 170 from developers or a file distribution system, for example, the server 160, which provides an installation file of the application.

The processors 212, 222 may be configured to process computer-readable instructions, for example, the aforementioned at least one program code, of a computer program by performing basic arithmetic operations, logic operations, and I/O operations. The computer-readable instructions may be provided from the memory 211, 221 and/or the communication modules 213, 223 to the processors 212, 222. For example, the processors212, 222 may be configured to execute received instructions in response to the program code stored in the storage device, such as the memory 211, 222.

The communication modules 213, 223 may provide a function for communication between the electronic device 110 and the server 150 over the network 170, and may provide a function for communication between the electronic device 110 and/or the server 150 and another electronic device, for example, the electronic device 110 or another server, for example, the server 160. For example, the processor 212 of the electronic device 110 may transfer a request created based on a program code stored in the storage device such as the memory 211, to the server 150 over the network 170 under control of the communication module 213. Inversely, a control signal, an instruction, content, a file, etc., provided under control of the processor 222 of the server 150 may be received at the electronic device 110 through the communication module 213 of the electronic device 110 by going through the communication module 223 and the network 170. For example, a control signal, an instruction, content, a file, etc., of the server 150 received through the communication module 213 may be transferred to the processor 212 or the memory 211, and content, a file, etc., may be stored in a storage medium further includable in the electronic device 110.

The I/O interface 214 may be a device used for interface with an I/O device 215. For example, an input device of the I/O device 215 may include a keyboard, a mouse, a microphone, a camera, etc., and an output device may include a device, such as a display for displaying a communication session of the application. As another example, the I/O interface 214 may be a device for interface with an apparatus in which an input function and an output function are integrated into a single function, such as a touch screen. In detail, when processing instructions of the computer program loaded in the memory 211, the processor 212 of the electronic device 110 may display a service screen configured using data provided from the server 150 or the electronic device 120, or may display content on a display through the I/O interface 214. Similarly, when processing instructions of the computer program loaded in the memory 221, by processor 222 of the server 150, the I/O interface 224 may output information configured using data provided from the electronic device 110 or server 160.

According to other example embodiments, the electronic device 110 and the server 150 may include greater or lesser number of components than the number of components shown in FIG. 2. For example, the electronic device 110 may include at least a portion of the I/O device 215, or may further include other components, for example, a transceiver, a global positioning system (GPS) module, a camera, a variety of sensors, a database, and the like. In detail, if the electronic device 110 is a smartphone, the electronic device 110 may be configured to further include a variety of components, for example, an accelerometer sensor, a gyro sensor, a camera, various physical buttons, a button using a touch panel, an I/O port, a vibrator for vibration, etc., which are generally included in the smartphone.

Hereinafter, a method and system for providing a survey service according to example embodiments will be described.

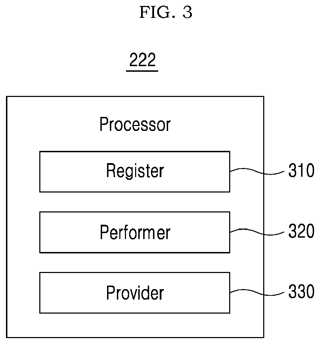

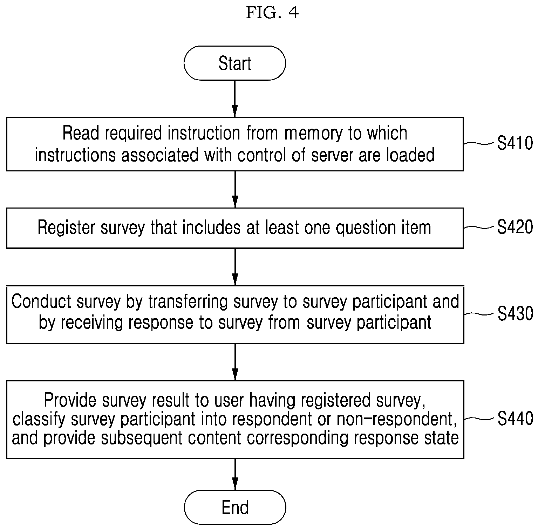

FIG. 3 is a block diagram illustrating an example of components includable in a processor of a server according to one embodiment, and FIG. 4 is a flowchart of a method performed by a server according to one embodiment.

A survey system configured as a computer may be configured in the server 150. The server 150 is configured to provide a survey service to the plurality of electronic devices 110, 120, 130, 140, and may provide the survey service by connecting to an exclusive application installed on the electronic devices 110, 120, 130, 140, and a website/mobile site associated with the server 150. Further, the server 150 may provide the survey service in conjunction with a schedule service, an internal communication service, a shopping service, a payment service, and the like, based on a type or a feature of a survey.

To perform the survey method of FIG. 4, the server 150 includes a register 310, a performer 320, and a provider 330 as shown in FIG. 3 as components or units of the processor 222 of the server 150. Depending on embodiments, the components of the processor 222 may be selectively included in the processor 222 or may be excluded from the processor 222. Also, depending on embodiments, the components of the processor 222 may be separated or merged for functional representations of the processor 222.

The processor 222 and the components of the processor 222 may control the server 150 to perform operations S410 through S440 included in the survey method of FIG. 4. For example, the processor 222 and the components of the processor 222 may be configured to execute instructions according to a code of at least one program and a code of an OS included in the memory 221.

Here, the components of the processor 222 may be representations of different functions of the processor 222 performed by the processor 222 in response to an instruction provided from the program code stored in the server 150. For example, the register 310 may be used as a functional representation of the processor 222 that controls the server 150 to register a survey in response to the instruction.

In operation S410, the processor 222 reads a required instruction from the memory 221 to which instructions associated with the control of the server 150 are loaded. In this case, the read instruction may include an instruction for controlling the processor 222 to perform operations S420 through S440.

In operation S420, the register 310 provides a survey completion interface and registers a survey that includes at least one question item including content input or selected from a user, i.e., a survey giver, through the survey completion interface. The register 310 may provide a template for completing question content and a selection item for each question item, and may provide a template pre-configured for a type or a feature of a survey. For example, in the case of a survey service provided in an internal communication environment of a company, the register 310 may pre-configure and provide survey templates of various themes, such as a conference schedule, a company dinner schedule, whether to participate in a ceremony, employee satisfaction, an opinion about a draft proposal, a vacation, a service availability, a quiz/test, and the like. The survey completion interface may also provide an input interface that allows a user to directly complete survey content and a selection item in a free style in addition to the preconfigured templates. The register 310 may also set a survey participant having a right to respond to a corresponding survey when registering the survey. The register 310 may provide a list of members registered to a service through the survey completion interface, and may grant the right to respond to all of the members included in the list of members or some members selected from the list of members. Also, the register 310 may register subsequent or follow-up content that is desired to be provided to the survey participant in association with the survey. The subsequent content may be set for each response state based on whether a response to the corresponding survey is received, or may be set for each piece of response content, that is, each selection item selectable as the response to the survey. Here, the subsequent content may be set for each of at least one response state based on whether the response to the survey is received, that is, each of at least one selection item selectable as the response to the survey. The subsequent content may include an additional survey, notice information, schedule information, event information, benefit information, for example, a coupon, and service page information, for example, a purchase link, as content associated with the survey. They are provided as examples only and any type of contents connectable to an additional operation associated with the survey may be applicable.

In operation S430, the performer 320 conducts the survey by transferring the survey registered by the user to the survey participant and by receiving a response to the survey from the survey participant. The performer 320 may transfer the survey to the survey participant through transmission media selected by the user that registers the survey. For example, the performer 320 may send a survey using a mail, a message such as a short messaging service (SMS) or a multimedia messaging service (MMS) message, and a messenger, and may directly send the survey to a service home through an account registered to the service. Here, the performer 320 may send the survey through a document form such as a message, a uniform resource locator (URL) of a survey page, and the like.

In operation S440, the provider 330 provides a result of the survey conducted with respect to survey participants and provides the survey result to the user (i.e., the survey giver) having registered the survey. Here, the provider 330 may disclose the survey result to a member corresponding to a respondent based on a setting of the user so that the survey result may be shared between the user and the respondent. In particular, the provider 330 may classify the survey participants into a respondent that responds to the survey and a non-respondent that does not respond to the survey, and may provide subsequent content corresponding to a response state. The response state may indicate whether a response is received, or indicate response content, that is, content of a selection item selectable as the response to the survey. For example, the provider 330 may verify whether the response is received from each of the survey participants, may classify each of the survey participants into a respondent or a non-respondent, and may provide a notice for encouraging a member corresponding to the non-respondent to participate in the survey as subsequent content. That is, the provider 330 may provide a remind notice message to the non-respondent in order to aggressively encourage the non-respondent to participate in the survey and to increase a survey response rate. As another example, the provider 330 may group members corresponding to respondents among survey participants based on response content and may provide subsequent content corresponding to corresponding response content for each group. For example, the provider 330 may additionally conduct a subsequent survey as the subsequent content with respect to a member that selects a specific selection item as a survey response, may conduct an invitation associated with the specific selection item, or may provide benefit information or a purchase link of a product associated with the specific selection item. The provider 330 may manage the subsequent survey through grouping with a main survey based on meta information. Here, the provider 330 may perform grouping based on a response of a member corresponding to a respondent and may perform a subsequent operation associated with a survey for each group or with respect to members of a specific group. The provider 330 may perform the subsequent operation with respect to the entire members included in a portion of groups that are grouped based on whether the response is received or the response content. Also, the user may arbitrarily select a target of the subsequent operation and may perform the subsequent operation with respect to the selected target.

The provider 330 may perform the subsequent operation associated with the survey in response to a user request, or at preset periods or a set point in time. For example, once the survey is completed, the provider 330 may provide subsequent or follow-up content to at least a portion of the survey participants at a point in time at which the user request is received. Here, the provider 330 may receive a member directly selected by the user to send the subsequent content and send the subsequent content to the selected member. Alternatively, the provider 330 may receive a condition, for example, one of a responder and a non-responder, one of selection items selectable as a survey response, a time zone in which a corresponding member has participated in the survey, and a profile of a survey participant such as a gender, a region, and an age, etc., of a member that is to receive the subsequent content, may select a member that meets the condition, and may provide the subsequent content to the selected member.

As another example, the provider 330 may provide the subsequent content to at least a portion of the survey participants at periods or a point in time preset by the user or set as a default value. For example, the provider 330 may automatically send the subsequent content at set periods or a set point in time during the progress of the survey, or at set periods or at a set point in time after the survey is completed. Here, if the subsequent content is automatically sent at set periods or the set point in time, a member to receive the subsequent content or the condition of the member to receive the subsequent content may be preset by the user.

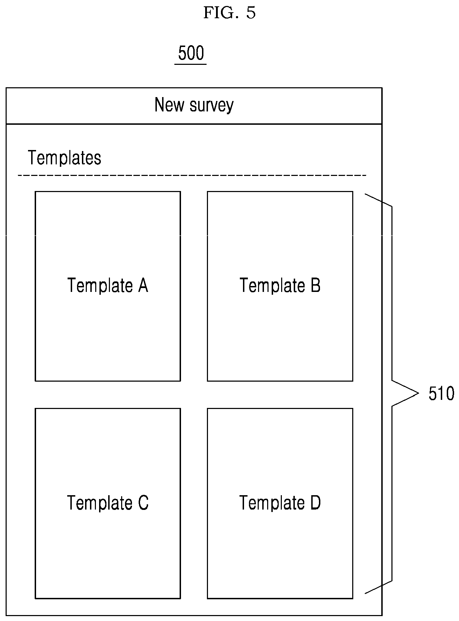

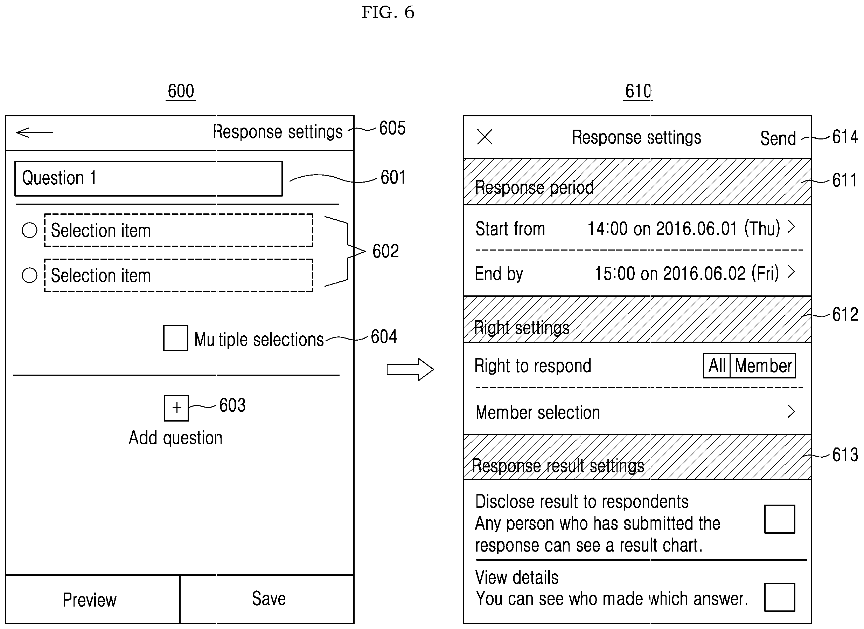

FIGS. 5 and 6 illustrate a survey registration process according to one embodiment.

FIG. 5 illustrates an initial screen 500 for a survey provided by the server 150 and displayed on the screen of the electronic device 110. The initial screen 500 may be accessed by a user through an exclusive application installed on the electronic device 110 or a website/mobile site associated with the server 150.

Referring to FIG. 5, the initial screen 500 may include a template list 510 registered in advance by an administrator providing the survey service to the user (the survey giver]. The template list 510 may include at least one template configured based on a survey theme. For example, in the case of a survey service associated with internal communication of a company, survey templates of various themes, such as a conference schedule, a company dinner schedule, whether to participate in a ceremony, employee satisfaction, an opinion about a draft proposal, a vacation, a service availability, a quiz/text, and the like, may be configured in advance and provided. In addition to a template with a fixed theme, the initial screen 500 may further include a template that allows a user to readily configure a question item under a free theme and other input interfaces.

FIG. 6 illustrates a survey completion screen 600.

In response to a user selecting a specific template from the template list 510 displayed on the initial screen 500 of FIG. 5, the server 150 provides the survey completion screen 600 to which the selected template is applied, to the electronic device 110 as shown in FIG. 6. Each template may include at least one question item associated with a corresponding theme, and may include question content 601 desired to be surveyed for each question item and selection items 602 selectable as a response to a question. The question item may also include an input item or box that allows a user to input additional responses to the question content, in addition to the predefined or fixed number of selection items 602.

The question content 601 and the selection item 602 included in the survey completion screen 600 may be displayed in a state in which default content is filled based on the theme of a corresponding survey and may be provided so that the user may select and edit a desired area. The survey completion screen 600 may also include an addition interface 603 for adding a question item and a multi-selection interface 604 for setting whether to allow a multi-selection for each question item.

In addition, the survey completion screen 600 may include a response setting interface 605 for setting a survey response environment. The server 150 may provide a response setting screen 610 in response to selecting the response setting interface 605 on the survey completion screen 600.

The response setting screen 610 may include a response period setting interface 611 for setting a response period, for example, a start day and an end day, during which a response to the survey is allowed, a right setting interface 612 for setting a survey participant having a right to respond to the survey, and a response result setting interface 613 for setting a response result, for example, a survey result, to be disclosed to a respondent or setting information associated with the respondent and response content to be verifiable from the response result. The right setting interface 612 may include an interface "All" for collectively assigning a response right to all of the members registered to a service and an interface "member" for assigning the response right to a portion of members selected by the user. The user may connect to a list of entire members registered on the service using the interface "Member". Here, the server 150 may provide a search environment for searching for a member using information, such as a name, an identifier (ID), a group to which the member belongs, and the like.

Although not illustrated, the survey completion screen 600 or the response setting screen 610 may further include an interface for registering in advance setting information associated with subsequent or follow-up content. For example, the server 150 may provide an interface environment for setting whether to send a notice to a non-respondent of a survey, setting whether to send a response result, for example, a survey result, to a respondent, or setting content to be sent to a respondent selecting a corresponding item for each selection item of the survey.

Accordingly, the user may further conveniently and easily register the survey and set relevant information using templates pre-configured for various themes.

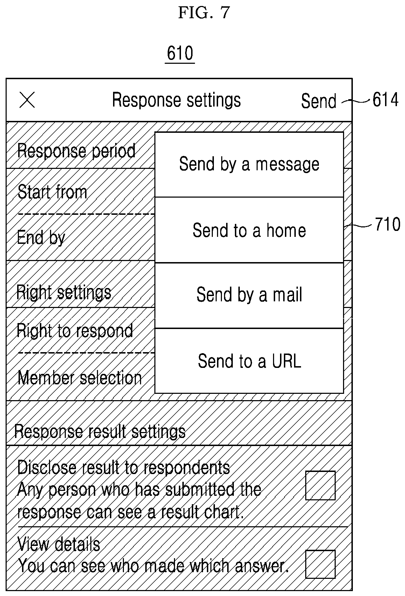

FIG. 7 illustrates a survey transfer process according to one embodiment.

Referring to FIG. 7, if a user selects an interface "Send" 614 after completing a survey through the survey completion screen 600 and setting a survey response environment through the response setting screen 610, a selection screen 710 for selecting a survey transfer scheme may be provided. Here, the selection screen 710 may include a selection interface for selecting media or a type used to transfer the survey registered by the user to a survey participant. For example, the selection screen 710 may include "Send by a message", such as an SMS, an MMS, and a messenger, "Send to a home", "Send by a mail", "Send to a URL" of a survey page, and the like.

Accordingly, the user may transfer the survey registered by the user to survey participants using various transmission scheme.

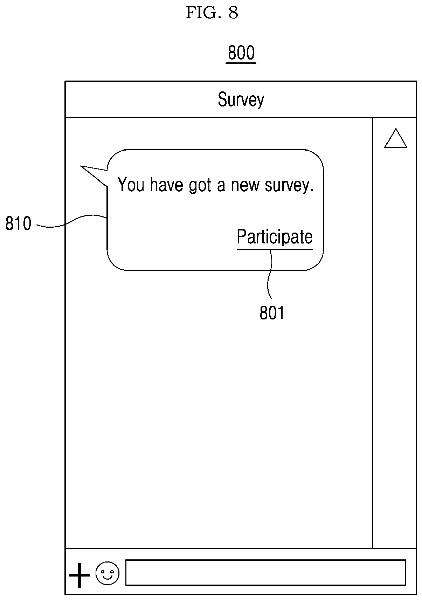

FIGS. 8 through 10 illustrate a survey participation process according to one embodiment.

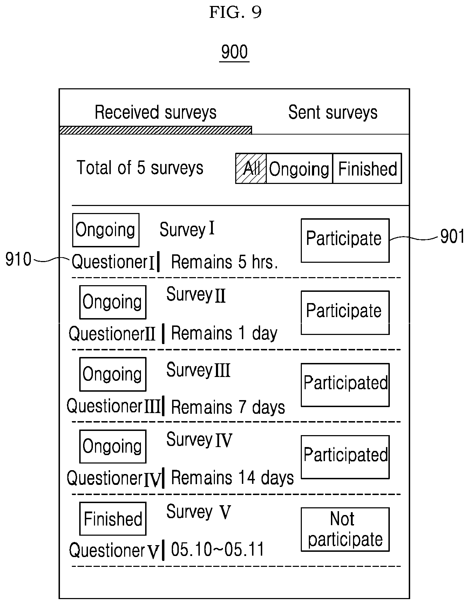

If a user sends a survey by a message, the server 150 may transfer the survey sent from the user to a survey participant using a corresponding messaging service. Referring to FIG. 8, a survey participant may receive a survey message 810 on the electronic device 110, sent from a user through a chatroom 800 associated with a survey service account or a user account. As another example, if a user sends a survey to a service home, i.e., an account on a survey service, the server 150 transfers, to a survey participant, the survey sent from the user through a personal account page on a survey service. Referring to FIG. 9, a survey participant may verify a survey 910 sent from a user through a received survey screen 900 that is a personal account page of the survey participant.

The received survey screen 900 may be provided on a display unit of the electronic device 110 and may include a list of all of the surveys in which a right to respond is assigned to a survey participant. Here, the surveys included in the list may be sorted based on a predetermined criterion, for example, in received order. A classification and reference function based on a survey progress state, for example, ongoing, finished, etc., a search function based on various conditions, such as a term, a title, content, and an entity of a corresponding survey, and the like, may be provided together.

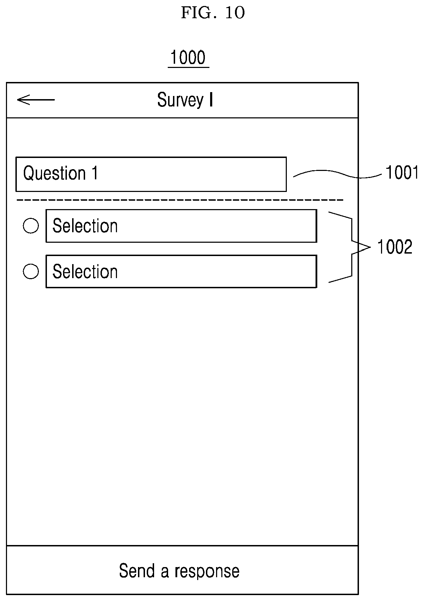

If the survey participant inputs a "Participate" button or link 801 on the survey message 810 received through the chatroom 800 of FIG. 8 or inputs a "participate" button 901 on the survey 910 received through the survey screen 900 of FIG. 9, the survey participant may connect to a response screen 1000 provided on the display of the electronic device 110 for inputting a response to a survey as shown in FIG. 10. The survey participant may participate in the survey by verifying survey content, that is, question content 1001 and selection items 1002, registered by the user through the response screen 1000, and by selecting a specific item from among the selection items 1002.

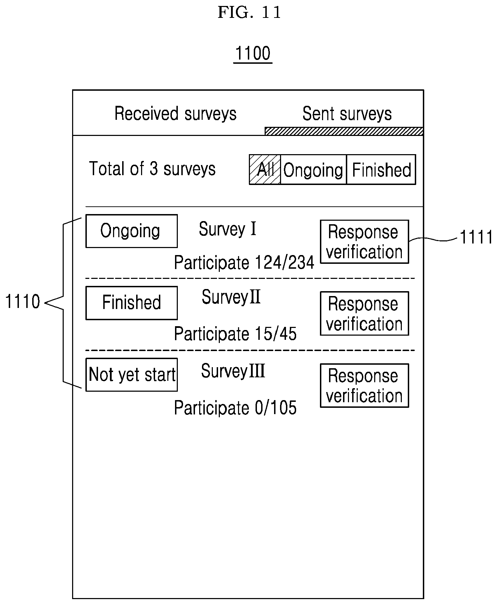

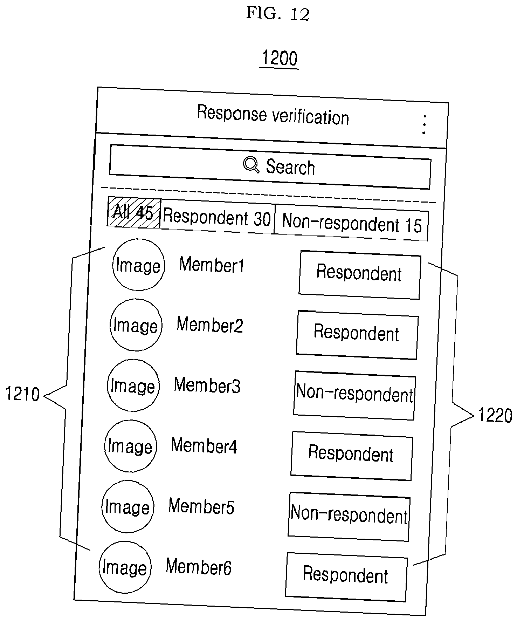

FIGS. 11 and 12 illustrate a survey result verification process according to one embodiment.

The server 150 may provide a response result, for example, a survey result, associated with a survey sent from a user through a personal account page of the user in the survey service. Referring to FIG. 11, a user may verify a survey registered by and sent from the user, and a response result from survey participants for each survey through a sent survey screen 1100 that is a personal account page of the user.

The sent survey screen 1100 may include a list 1110 of all of surveys registered by the user. Here, the surveys included in the list 1110 may be sorted based on a predetermined criterion, for example, in sent order. Also, a classification and reference function based on a survey progress state, for example, not yet start, ongoing, finished, etc., a search function based on various conditions, such as a period, a title, content, and a survey participant, and the like, may be provided together.

The sent survey screen 1100 may include a response verification interface 1111 for verifying a response result of a corresponding survey included in each of the surveys included in the list 1110. If the user inputs the response verification interface 1111 with respect to a specific survey on the sent survey screen 1100 of FIG. 11, the server 150 may provide a response verification screen 1200 to the user that includes a response result associated with the selected survey as shown in FIG. 12.

The response verification screen 1200 may include a list 1210 of survey participants having a right to respond to a corresponding survey and state information 1220 indicating whether a response to the survey is received for each member. The survey participants included in the list 1210 may be sorted based on a predetermined criterion, for example, names of the participants. Also, a classification and reference function based on whether a response to a survey is received, a search function based on various conditions, such as a name, an ID, a group to which a survey participant belongs, and the like, may be provided together.

Although not illustrated, it is possible to classify each of survey participants into a respondent or a non-respondent and to filter out a respondent based on a selection item selected by the respondent. For example, if survey content includes a selection A and a selection B, respondents may be classified into a group of respondents that select the selection A and a group of respondents that select the selection B.

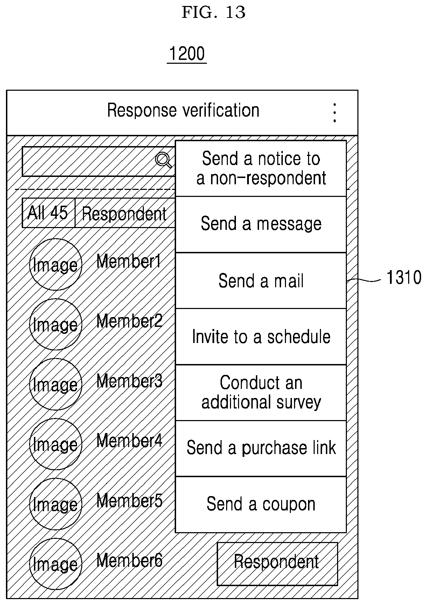

FIG. 13 illustrates a subsequent operation proceeding process according to one embodiment.

Referring to FIG. 13, the server 150 may provide a menu screen 1310 for performing a subsequent operation associated with a corresponding survey through an interface screen that includes a response result, on the response verification screen 1200.

The menu screen 1310 may include a menu for sending a notice for encouraging a member corresponding to a non-respondent to participate in a survey. In response to receiving a user request using the menu, the server 150 may send a remind notice to a non-respondent among survey participants. Here, the server 150 may send a remind notice to all of the non-respondents or a member arbitrarily selected by the user from among the respondents. In addition to the user request using the above menu, the server 150 may automatically send the remind notice by filtering out a non-respondent at setting periods or at a set point in time. A period or point in time for sending the notice may be preset by the user or may be determined as a default value.

The menu screen 1310 may further include menus for transferring subsequent content associated with a survey to a member corresponding to a respondent. The subsequent content may include an additional survey, notice information, schedule information, event information, benefit information, for example, a coupon, service page information, for example, a purchase link, and the like. For example, the menu screen 1310 may include a "Send a message" menu for sending a schedule associated with a survey by a message, a "Send a mail" menu for sending the schedule associated with the survey by a mail, an "Invite to a schedule" menu for registering a respondent to the schedule associated with the survey, a "Conduct an additional survey" menu for sending an additional survey, a "Send a coupon" menu for sending benefit information, such as a coupon associated with the survey, and the like.

The server 150 may send subsequent content to a respondent in response to a user request using a specific menu on the menu screen 1310. As another example, the server 150 may automatically send preset subsequent content at a set point in time during a progress of a survey or at a point in time at which the survey is completed. Subsequent content may be set for each piece of response content, that is, for each selection item selectable as a response to the survey. The server 150 may group members corresponding to respondents based on the response content and may provide subsequent content corresponding to the response content for each group. For example, if a survey includes a selection A and a selection B, an additional question is set to the selection A, and a purchase link is set to the selection B, the server 150 may send the additional survey to a respondent that selects the selection A and may send the purchase link to a respondent that selects the selection B. Here, the server 150 may provide the subsequent content to all of the respondents or a member that is arbitrarily selected by the user from among the respondents.

Accordingly, it is possible to classify a survey participant into a respondent or a non-respondent, to provide a remind notice to the non-respondent, and to provide content corresponding to response content to the respondent.

According to some example embodiments, it is possible to further increase a survey response rate by verifying a response state of a survey participant, by classifying the survey participant into a respondent or a non-respondent, and by providing a participation encouragement notice to the non-respondent. According to some example embodiments, it is possible to consecutively perform a series of survey-related operations in an easier manner by performing a subsequent operation corresponding to each response state for each response state of a survey participant.

The foregoing description has been provided for purposes of illustration and description. It is not intended to be exhaustive or to limit the disclosure. Individual elements or features of a particular example embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A survey method implemented over a network for conducting a mobile survey, the method comprising:
registering, with a server, a survey that includes at least one question item;
transferring the survey through the network from the server to a computer of survey participants and receiving a response to the survey from the survey participants; and
providing subsequent content associated with the survey to at least a portion of the survey participants in association with a response state of the survey.

2. The method of claim 1, wherein the registering of the survey comprises:
providing a plurality of templates in which the question item is preset for each survey theme; and
registering a survey of a corresponding theme using a template selected from the templates.

3. The method of claim 1, wherein the registering of the survey comprises setting the subsequent content based on whether the response to the survey is received.

4. The method of claim 1, wherein the registering of the survey comprises setting the subsequent content with respect to at least one selection item that is selectable as a response to the question item.

5. The method of claim 1, wherein the providing of the subsequent content comprises grouping the survey participants based on the response state, and providing the subsequent content corresponding to the response state to at least one grouped member.

6. The method of claim 5, wherein the response state includes at least one of whether a response to the question item is received and response content.

7. The method of claim 1, wherein the providing of the subsequent content comprises classifying the survey participants into a respondent and a non-respondent based on whether the response to the survey is received, and providing a remind notice for encouraging a member corresponding to the non-respondent to participate in the survey.

8. The method of claim 1, wherein the providing of the subsequent content comprises providing content associated with a specific selection item to a member that selects the specific selection item as a response to the question item among the survey participants.

9. The method of claim 1, wherein the subsequent content includes at least one of an additional survey, notice information, schedule information, event information, benefit information, and service page information as content associated with the survey.

10. A non-transitory computer-readable recording medium storing instructions that, when executed by a processor, cause the processor to conduct a mobile survey over a network, the method comprising:
registering, with a server, a survey that includes at least one question item;
transferring the survey through the network from the server to a computer of survey participants and receiving a response to the survey from the survey participants; and
providing subsequent content associated with the survey to at least a portion of the survey participants in association with a response state of the survey.

11. A survey system for conducting a mobile survey over a network, the survey system comprising:
at least one processor configured to execute computer-readable instructions,
wherein the at least one processor comprises:
a register configured to register a survey that includes at least one question item;
a performer configured to transfer the survey to survey participants and by receiving a response to the survey from the survey participant; and
a provider configured to provide subsequent content associated with the survey to at least a portion of the survey participants in association with a response state of the survey.

12. The survey system of claim 11, wherein the register is configured to provide a plurality of templates in which the question item is preset for each survey theme, and to register a survey of a corresponding theme using a template selected from the templates.

13. The survey system of claim 11, wherein the register is configured to set the subsequent content based on whether the response to the survey is received.

14. The survey system of claim 11, wherein the register is configured to set the subsequent content with respect to at least one selection item that is selectable as a response to the question item.

15. The survey system of claim 11, wherein the provider is configured to group the survey participants based on the response state, and to provide the subsequent content corresponding to the response state to at least one grouped member.
